# EUROPEAN PATENT APPLICATION

(11) **EP 2 101 484 A1**
(43) Date of publication of application: **16.09.2009**
(21) Application number: 08152524.8
(22) Date of filing: 10.03.2008
(51) Int. Cl.: H04N 5/00, H04N 5/445

(54) **Electronic device and method for providing a combined data set relating to program information**

(71) Applicant: Sony Corporation, Tokyo 108-0075 (JP)
(72) Inventor: Mank, Armin, 70327 Stuttgart (DE)
(74) Representative: Körber, Martin Hans

(57) **Abstract**

The present invention relates to an electronic device (1) for providing a combined data set relating to program information, comprising a communication means (5) for communicating with at least one further electronic device (8, 8a, 8b, 8c, 8d) and for receiving from the at least one further electronic device (8, 8a, 8b, 8c, 8d) a data set comprising information on broadcast programs, a central processing unit (4) for combining at least the received data sets to a combined data set and an output means (2) for outputting the combined data set.

The present invention further relates to a method for providing a combined data set relating to program information.

## Description

The present invention relates to an electronic device for providing a combined data set relating to program information and to a method for providing a combined data set relating to program information. Specifically, the present invention relates to the field of combining data sets received from different sources to a combined data set.

Electronic devices are used in a wide field of applications. Such devices may for example be a personal computer, a television, a video recorder, a DVD or a HDD recorder, facsimile devices, digital cameras, mobile terminals for wireless communication or other electronic consumer devices.

An important task in developing electronic devices, specifically since the number of available electronic devices and the different functionalities constantly increases, is to provide functionalities in applications which allow the user to easily have the overview over the different devices and the offered services.

Specifically in case that television or radio or any other broadcast programs are provided by different electronic devices, it is important that the user has an overview of the different programs and services offered by the different electronic devices.

Accordingly it is the object of the present invention to overcome the disadvantages of the state of art. Specifically, it is the object of the present invention to provide an electronic device as well as a method which allows the user to easily have an overview over all offered program information and offered services.

This object is solved by an electronic device for providing a combined data set relating to program information according to claim 1. This object is further solved by a method for providing a combined data set relating to program information according to claim 18.

The present invention relates to an electronic device for providing a combined data set relating to program information, comprising a communication means for communicating with at least one further electronic device and for receiving from the at least one further electronic device a data set comprising information on broadcast programs, a central processing unit for combining at least the received data sets to a combined data set and an output means for outputting the combined data set.

The present invention further relates to a method for providing a combined data set relating to program information, comprising the steps of communicating with at least one further electronic device, receiving from the at least one further electronic device a data set comprising information on broadcast programs, combining the received data sets to a combined data set and outputting (S6) the combined data set.

The subclaims contain further advantageous implementations of the present invention.

The present invention will now be explained in more detail in the following description of preferred embodiments in relation to the enclosed drawings in which
Figure 1 shows a schematic block diagram of an electronic device according to the present invention,
Figures 2a and 2b show different types of networks comprising an electronic device according to the present invention,
Figure 3 is a schematic block diagram of an electronic device according to a first embodiment of the present invention,
Figure 4 is a schematic block diagram of an electronic device according to a second embodiment of the present invention,
Figure 5 is a flow chart showing the process steps carried out according to the method of the present invention,
Figure 6 is a flow chart showing the process steps carried out for creating the combined data set,
Figure 7 is a flow chart showing the process steps for receiving input related to the combined data set,
Figure 8a is an example of an electronic program guide and
Figure 8b is an example of a menu enabling the user to select a service.

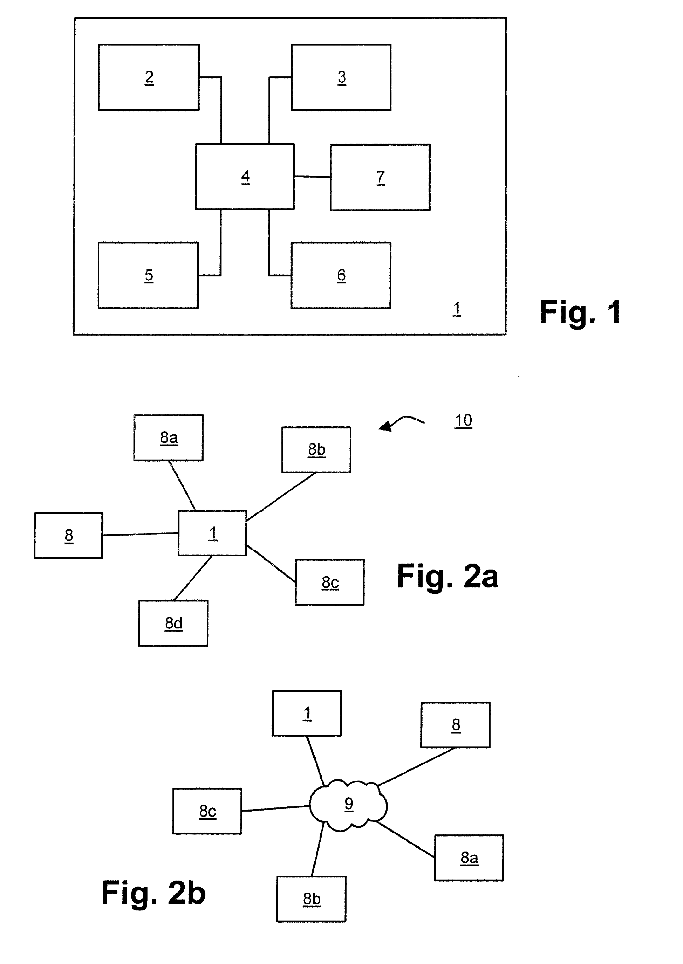

Figure 1 is a schematic block diagram showing the elements of an electronic device 1 according to the present invention. The electronic device 1 can be a personal computer, a television, a video recorder, a DVD or HDD recorder, a facsimile device, a digital camera, a mobile terminal for wireless communication, generally a set top box STB or any other electronic consumer device adapted to carry out the functions according to the present invention.

With reference to Figure 1 the general components and functions of an electronic device 1 according to the present invention will be explained. The electronic device 1 comprises an output means 2 enabling the output of data and/or information directly to a user or to another electronic device. The output means 2 therefore may be a display, loud speaker, any other graphical user interface adapted to output data and/or information to a user or an interface for wirelessly or over a wired connection outputting data and/or information to a further electronic device. The output means 2 can also be a combination of any of the above mentioned possibilities.

The electronic device 1 further comprises an input means 3 for enabling input of data and/or information either by a user or from another electronic device. The input means 3 therefore may be a keyboard, a mouse, a touchpad, recognition of speech, an interface for receiving data input over a remote controller or any other interface enabling the user to input data and/or information or to select applications or programs. The input means 3 can also be a wired or wireless connection to another electronic device in order to enable the reception of data and/or information from the other electronic device. The input means 2 can also be a combination of any of the above mentioned possibilities

The output means 2 and the input means 3 are connected to and in data communication with a central processing unit 4. The processing unit 4 hereby controls and supervises the transmission and processing of data and/or information within the electronic device 1. The central processing unit 4 further supervises the operation of the electronic device 1.

The electronic device 1 further comprises a communication means 5 enabling a communication with at least one further electronic device. The communication means therefore may be a single interface or bus or may comprise a plurality of interfaces or buses enabling communication with at least one further device. The communication means 5 can be adapted to communicate according to one or to several different communication standards, for example according to a consumer electronics control CEC standard, a combined HDMI/CEC connection, via an Ethernet or IP-connection, any other connection type or a combination of any of the above mentioned communication standards.

The electronic device 1 further comprises a storage 6 provided for temporally and/or permanently storing data, information, programs, applications and the like. The storage 6 can be divided into different memory spaces each providing different types of memory, e. g. a random access memory RAM, a flash memory or other types.

Optionally, a reception unit 7 can be provided for enabling the reception of broadcast programs, e. g. television or radio programs, and for additionally receiving a data set comprising information on the broadcast programs. For example the data set can be an electronic program guide EPG.

The communication means 5, the storage 6 and the reception unit 7 are all connected to and in data communication with the central processing unit 4.

In Figures 2a and 2b embodiments of different types of networks comprising an electronic device 1 according to the present invention are explained. It is to be noted that the present electronic device 1 is not limited to the use within any of the two shown types of networks but can be used in any other type of network or a combination of the shown types of networks.

Figure 2a shows a first example of a network 10 comprising the electronic device 1 as well as several further electronic devices 8, 8a, 8b, 8c, 8d all connected to and in data communication with the electronic device 1. The communication between the electronic device 1 and the further electronic devices 8, 8a, 8b, 8c, 8d is hereby accomplished via the communication means 5. Each of the further electronic devices 8, 8a, 8b, 8c, 8d therefore also comprises an analogue component like the communication means enabling a communication with the electronic device 1. The communication between the electronic device 1 and any of the further electronic devices 8, 8a, 8b, 8c, 8d can be accomplished according to the same or according to different communication standards. Additionally, some or all of the further electronic devices 8, 8a, 8b, 8c, 8d can also communicate with each other either via a direct link or via the electronic device 1.

Figure 2b shows a second example of a network comprising an electronic device 1 according to the present invention. In this case a common and central network 9 is provided to which the electronic device 1 and the further electronic devices 8, 8a, 8b, 8c are connected.

Generally, there exist many electronic devices which are adapted to receive broadcast programs, i.e. television, radio or the like received via the internet, e.g. IPTV, via satellite, cable, terrestrial means or over any other connection. These electronic devices additionally are adapted to receive information on broadcast programs. Such a type of information is for example an electronic program guide EPG but the present invention is not limited to this type of information. Depending on the type of the electronic device, different data sets comprising information on broadcast programs are provided by the different electronic devices. For example digital video broadcasting DVB can be provided from different sources. For example DVB-S is transmitted via satellite, DVB-C is transmitted via cable and DVB-T is transmitted via terrestrial transmission. It can therefore happen that for example the television offers a data set comprising information on broadcast program, i. e. an electronic program guide, for DVB-T services, a set top box offers an EPG for DVB-S service and so on. The problem hereby is that the consumer must handle each data set of the different electronic device individually and has to check each electronic device separately. The user has no common overview over all available services from a single instance.

The main idea according to the present invention is therefore to provide an electronic device 1 which is adapted to receive data sets comprising information on broadcast programs from at least one further electronic device and to combine at least the received data sets to a combined data set and to output the combined data set. The different data sets hereby can be provided by the electronic device 1 itself and by at least one further electronic device 8, 8b, 8c, 8d or can only be provided by several of the further electronic devices 8, 8a, 8b, 8c, 8d so that the electronic device 1 itself provides no data set and only has the functionality to receive the data sets from the further electronic devices 8, 8a, 8b, 8c, 8d, to combine them to a combined data set and output the combined data set.

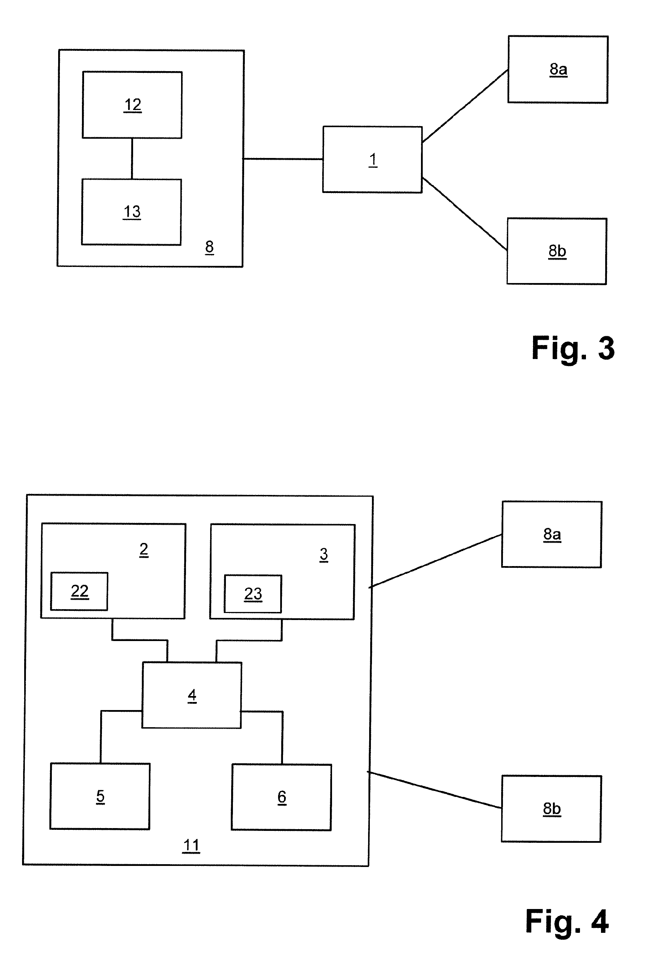

With reference to Figure 3 a first embodiment of an electronic device 1 according to the present invention will be explained. In this embodiment the electronic device 1 is connected to several further electronic devices 8, 8a and 8b. Even though in Figure 3 the connection is shown via the electronic device like previously explained with reference to Figure 2a, the connection can also be accomplished by a network as shown in Figure 2b or by any other type of network or connection.

The electronic device 1 receives several data sets comprising information on broadcast programs. The electronic device 1 may receive the data sets from one or more of the connected further electronic devices 8, 8a, 8b and can also additionally provide its own data set which was received via the reception unit 7.

The central processing unit 4 of the electronic device 1 then combines the received and if present the own data set to a combined data set, whereby the details of the combination will be explained later. In the present embodiment according to Figure 3 the output means 2 is an interface or any other communication component enabling to submit the combined data set to one further electronic device, which in the present embodiment is designated with reference numeral 8.

The further electronic device 8 comprises a user output means 12 and a user input means 13. The user output means 12 hereby serves for outputting the combined data set to a user, whereby the combined data set was received from the electronic device 1 via the output means 2. Specifically, the user output means 12 can be a display, loud speakers or the like or any combination of these. The user input means 13 enables the user to input data and/or information or to select programs or applications. Specifically the user input means 13 in the present embodiment enables the user to select data or services from the combined data set which is output by the user output means 12.

In this embodiment the input means 3 of the electronic device 1 is an interface or a communication means enabling to receive input information from the further electronic device 8. That means that if the user via the user input means 13 implemented in the further electronic device 8 selects specific data parts or services within the combined data set, then the further electronic device 8 will submit these inputs to the electronic device 1 via the input means 3 of the electronic device 1.

In this specific embodiment the output means 2 and the input means 3 of the electronic device, since both means serve for communicating with the further electronic device 8, can also be combined in one single component.

The main idea according to the first embodiment as shown in Figure 3 is therefore that the electronic device 1 is adapted to receive the data sets and combine them to a combined data set, but that the electronic device 1 itself is not adapted to output the combined data set to a user or to accept input from a user but for this purposes uses the further electronic device 8.

The advantage with this embodiment is, that a network comprising electronic devices, whereby none of the electronic devices has the functionality of providing a combined data set, can be updated by providing additionally the electronic device 1 within the network. The functionalities of the electronic device 1 are hereby narrowed down only to receiving and combining the data sets and submitting the combined data set to a further electronic device thereby using as much as possible the resources already present within the network.

In case that the electronic device via the user input means 13 and via the input means 3 has received an input from the user, the electronic device 1 is further adapted to send commands or instructions to one or more of the further electronic devices dependent on the selection and/or input of the user.

A second embodiment is shown in Figure 4. Hereby the second embodiment of an electronic device 1 is designated with reference numeral 11. The electronic device 11 according to a second embodiment comprises the same components which were described in general with respect to Figure 1, namely the electronic device 11 comprises an output means 2, an input means 3, a communication means 5 and a storage 6 all connected to end in data communication with the central processing unit 4. Optionally (not shown in the Figure) the electronic device 11 may also comprise a reception unit 7.

Additionally, the electronic device 11 comprises a display 22 and a user interface 23. The display 22 is hereby implemented in the output means 2 and can be identical to the output means 2 or can be comprised within the output means 2 among other components. The output means 2 can for example further comprise loudspeakers or a connection to a further electronic device. Likewise the user interface 23 is implemented in the input means 3 and can be identical to the input means 3 or can be implemented in the input means 3 among other components, such as a mouse, a keypad, a touchpad or a connection to another electronic device.

In the second embodiment the electronic device 11 has embedded within the complete functionalities for carrying out the functions according to the present invention. This has the advantage that no additional component or device has to be provided within the network. In this second exemplary embodiment, the electronic device 1 is connected to two further electronic devices 8a, 8b either directly or via any other type of network connection, but can also be connected to more further electronic devices.

The electronic device 11 via the communication means 5 can receive from the further electronic devices 8a, 8b data sets comprising information on broadcast program and can additionally receive its own data set in case that a reception unit 7 is provided. The central processing unit 4 then combines the received data sets to a combined data set, which is then shown on the display 22. The user via the user interface 23, which can for example be an interface for reception of infrared IR signals, is enabled to input commands thereby selecting parts of the data set which are shown by the display 22.

In an alternative embodiment the electronic device 1 can be a mixture between the first and second embodiment which were explained with reference to Figures 3 and 4. That means that the electronic device may output the combined data set to a further electronic device 8, which in turn then outputs the combined data set via a user output means 12 to the user. Instead of accepting input via the user input means 13 of the further electronic device 8, the electronic device 1 can also have implemented an user interface 23 enabling the electronic device 1 to directly receive input from the user.

Likewise the electronic device 1 can comprise an implemented display 22 but is only adapted to receive input via a user input means 13 implemented in a further electronic device 8.

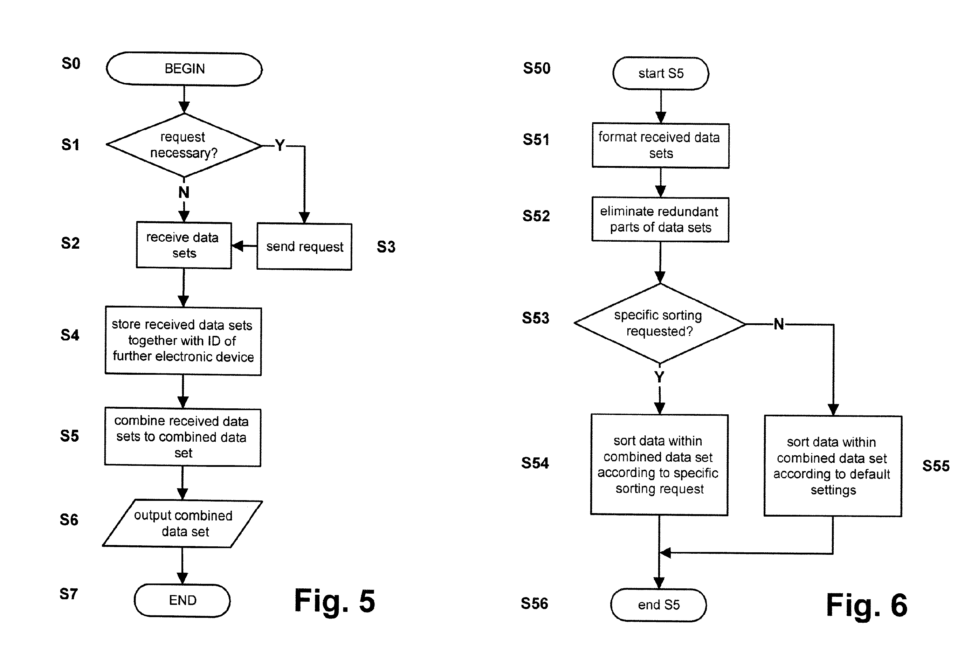

Figure 5 is a flow chart showing the process steps according to the method of the present invention. The process begins in step S0, e. g. during the continuous mode of the electronic device or with switching the electronic device 1 on. In the first step S1 the electronic device 1 can check whether a request for data sets is necessary, i. e. whether the further electronic devices 8, 8a, 8b, 8c, 8d automatically transmit their data sets e. g. when switching them on, or if a request from the electronic device 1 is necessary. If in step 1 the electronic device determines that no request is necessary then in the next step S2 the data sets will be received from at least one further electronic device 8, 8a, 8b, 8c, 8d. Otherwise, if the electronic device 1 in step S 1 determines that a request is necessary, then the electronic device 1 via the communication means 5 may send a request to one or more of the further electronic devices 8, 8a, 8b, 8c, 8d and then in the next step as an answer to the request will receive the data sets from the further electronic devices 8, 8a, 8b, 8c, 8d. Optionally, the electronic device 1 can also receive its own data set via the reception unit 7.

The electronic device 1 may already have a list of all further electronic devices 8, 8a, 8b, 8c, 8d connected to the network with the corresponding logical addresses to which they are connected. Specifically, in case of a consumer electronics control CEC network, the connected further electronic devices 8 will have fixed logical addresses.

Otherwise, if the electronic devices are connected within a network with variable addresses, then together with the data set each further electronic device 8, 8a, 8b, 8c, 8d may transmit its own ID or address to the electronic device 1. The electronic device 1 can also be implemented in a combined network comprising a combination of CEC and Ethernet connection.

In the next step S4 the electronic device 1 stores the received data sets in the storage 6 and together with the data sets stores the address or identification ID of each further electronic device 8, 8a, 8b, 8c, 8d, so that each data set can be associated with one further electronic device 8, 8a, 8b, 8c, 8d or with the respective address within the network.

In the next step S5 the central processing unit 4 of the electronic device 1 will combine the received data sets to a combined data sets and in the following step S6 the output means 2 will output the combined data set. As previously explained, the output in step S6 hereby can be accomplished either by outputting the combined data set to a further electronic device 8, which then in turn outputs the combined data set to a user, or by directly outputting the combined data set to a user for example via a display 22.

The process ends in step S7.

With reference to Figure 6 in the following the detailed steps for combining the received data sets to a combined data set will be explained. The process of step S5 starts in step S50. In the next step S51 the electronic device 1, if necessary, changes the format of the received data sets in order to obtain a uniform data format. As previously explained the received data sets may comprise only data sets from further electronic devices or may comprise additionally an own data set of the electronic device received via the reception unit 7. In the next step S52 the electronic device 1 checks whether redundant parts provided within the data sets, i. e. whether in two data sets the same data parts are provided. If this is the case the electronic device 1 will eliminate the redundant part of data sets. The steps S51 and S52 can hereby also be accomplished in a different order.

In the next step S53 the electronic device 1 checks whether a specific sorting of the combined data set has been requested. For example in the case of an electronic program guide a sorting according to programs, times, genre or the like may be requested. If no specific sorting has been requested then in the next step S55 the electronic device 1 will sort the data within the combined data set according to default settings. The default settings can hereby be provided either by the vendor or may have been changed by the user.

Otherwise, if in step S53 the electronic device 1 determines that a specific sorting has been requested, then in the step S54 the data within the combined data set will be sorted according to the specific sorting request. The process of combining the data sets ends in step S56.

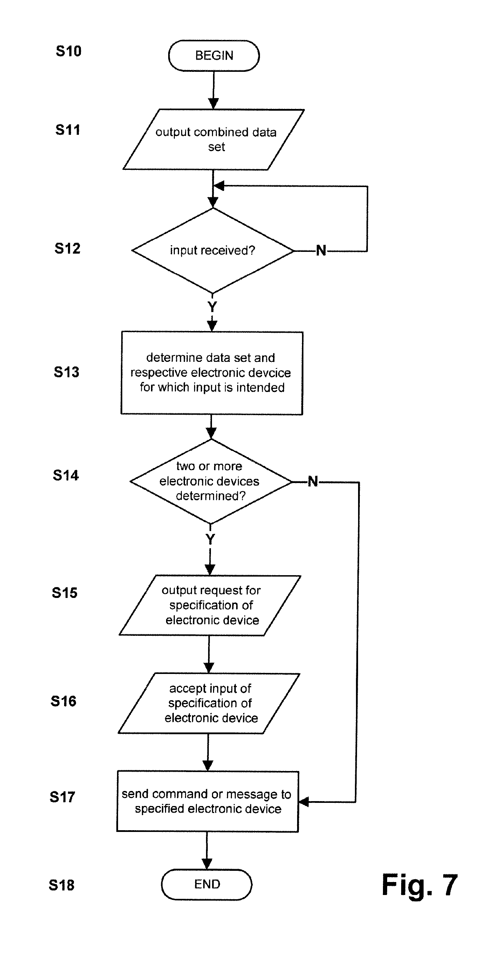

Figure 7 shows a process for accepting input by the user regarding a selection of a data part, a service or an event within the output combined data set.

The process begins in step S10. In step S11 the combined data set is output. In the next step S12 it is checked whether an input has been received. The input can hereby be received directly by an user interface 23 implemented in the electronic device 1 or can be received via a user input means 13 from a further electronic device 8. If an input has been received, then in step S 13 the electronic device 1 will check according to the data stored in the storage 6, from which further electronic device 8, 8a, 8b, 8c, 8d the respective data set has been received, i.e. for which data set and electronic device the input is intended. That means that if the user selects a specific event, service or data part within the combined data set, then the electronic device 1 will check from which further electronic device the specific data set within the combined data set has been received. The electronic device 1 therefore comprises a list or table stored in the storage 6 containing the relationships between the received data sets and the addresses or identifications within the network of the further electronic devices 8, 8a, 8b, 8c, 8d and can look up within the table or list which address belongs to which data set.

That means, that within the storage a routing information is stored together with each received data set. This routing may also comprise information on the correct audio and video routing paths.

In the next step S 14 the electronic device 1 checks whether the specific event, data part or service selected by the user is provided by two or more electronic devices.

If this is not the case then the electronic device 1 can unambiguously determine the further electronic device 8, 8a, 8b, 8c, 8d for which the input is intended.

Otherwise, if in step S 14 it is determined that the selected event or service is provided by two or more electronic devices then in the following step S15 the electronic device will output a request for specifying an electronic device or a service. This output again can be either accomplished directly by the display 22 implemented in the electronic device 1 or by a user output means 12 implemented in a further electronic device 8. In the next step S16 then the input of a specification of a further electronic device 8, 8a, 8b, 8c, 8d is received.

In any case in the next step S 17 a command or message is sent to the specified electronic device and possibly also to other electronic devices. This command or message comprises all content necessary for enabling the specified electronic device and/or further electronic device to carry out the processes selected by the user within the combined data set. If the user for example selects an event or service provided by the set top box, then the electronic device 1 will send a message to power up the set top box, will further select the event channel, select the correct input of the Television to display the set top box signals and will select the correct audio path. Same applies to the case that the selected service or data part is offered by the electronic device 1 itself.

If in step S12 no input has been received then the process goes back to step S12 where it is checked at predefined time intervals whether an input has been received. Alternatively, after a specific time the electronic device 1 can go into standby or switch automatically off. The process ends in step S 18.

The present invention may comprises update cycles for updating the combined data set. The electronic devices may either constantly send updated data sets or the electronic device 1 may constantly request updated data sets. The timing of the update cycles may be fixed timings or flexible up to user settings.

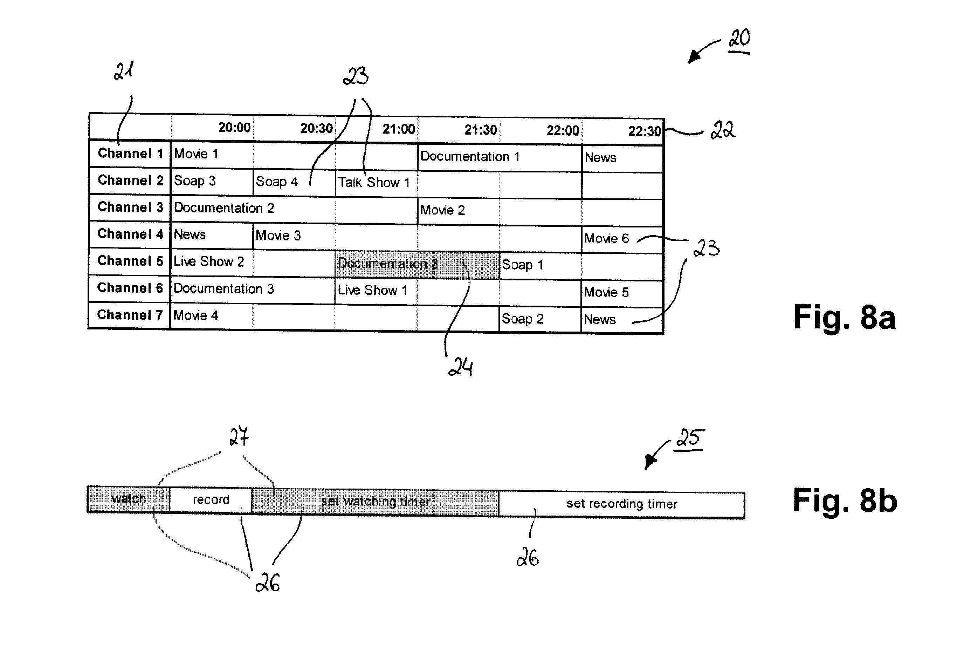

Figure 8a shows an example of a combined data set according to the present invention. Figure 8a is hereby explained exemplary by showing an electronic program guide EPG, but the present invention is not limited to an electronic program guide but can be used for any kind of data sets relating to information on broadcast programs. In the electronic program guide according to Figure 8a in the first line 22 information on the time is provided. In the column 21 the different channels are listed. In the fields 23 within the table then it is shown at which time and on which channel different programs are offered. This table hereby comprises data sets received from different electronic devices. For example the channels 1 to 4 are provided by the television and the channels 5 to 7 are provided by a set top box or DVD recorder. The user with this table has the overview over all data sets and services provided by the different electronic devices and can easily select an event or program without worrying about which electronic device he will have to use for choosing the respective event or program. The user can navigate through the different programs and the actual selected program 24 can for example be identified by changing the background of the respective field or highlighting the respective field in any way.

If now the user for example via the user input means 13 or via the user interface 23, i. e. in any case via the input means 3 selects this program, which in the present example could be documentation 3, then the electronic device 1 will check from which electronic device the respective program is offered. In case that only one electronic device offers the program no further steps will be accomplished. Otherwise, if the respective program is offered by more electronic devices or if the respective program is offered by only one electronic device offering several different services, then a menu can be shown as for example according to Figure 8b.

The user can then navigate through the menu and select different options. For example he can choose to directly watch the selected program, to record the selected program, to set a watching timer for the selected program, so that for example a power up time of the electronic device is set, or he may set a recording timer. Advantageously, in order to make it easier for the user to have an overview which services he can choose, the fields he can choose for the respective program can also be highlighted. In the present example the highlighted field 27 comprises the possibilities of watching or setting a watching timer. This would mean, that in the present example the program the user has selected is only provided by the television but can not be recorded by any recording device.

With the present invention the user has easily the overview over all data sets provided by the different electronic equipments. He can easily select a service, program or event and does not have to take care about the respective electronic device that provides the service or the signal routing, since the electronic device 1 has stored a list of addresses and data sets and can automatically route the command and messages to the one or more correct electronic devices

## Claims

1. Electronic device (1) for providing a combined data set relating to program information, comprising
a communication means (5) for communicating with at least one further electronic device (8, 8a, 8b, 8c, 8d) and for receiving from the at least one further electronic device (8, 8a, 8b, 8c, 8d) a data set comprising information on broadcast programs, a central processing unit (4) for combining at least the received data sets to a combined data set and
an output means (2) for outputting the combined data set.

2. Electronic device (1) according to claim 1,
wherein the central processing unit (4) is further adapted to request the data set from the at least one further electronic device (8, 8a, 8b, 8c, 8d)

3. Electronic device (1) according to claim 1 or 2,
wherein the output means (2) is a display (22) implemented in the electronic device (1).

4. Electronic device (1) according to claim 1 or 2,
wherein the output means (2) is an interface for transmitting the combined data set to one further electronic device (8, 8a, 8b, 8c, 8d).

5. Electronic device (1) according to any of the preceding claims,
further comprising a reception unit (7) for receiving an own data set comprising information on broadcast programs from a remote station.

6. Electronic device (1) according to claim 5,
wherein the central processing unit (4) is further adapted to combine the own data set and the received data sets to said combined data set.

7. Electronic device (1) according to any of the preceding claims,
wherein the central processing unit (4) is further adapted to change the format the data sets.

8. Electronic device (1) according to any of the preceding claims,
wherein the central processing unit (4) is further adapted to eliminate redundant parts of data sets before combining the data sets.

9. Electronic device (1) according to any of the preceding claims,
wherein the central processing unit (4) is further adapted to sort the data within the combined data set according to specific sorting parameters.

10. Electronic device (1) according to any of the preceding claims,
wherein the central processing unit (4) is further adapted to receive together with each data set an address identifying the further electronic device.

11. Electronic device (1) according to claim 10,
further comprising a storage (6) for storing the received data sets together with the received addresses.

12. Electronic device (1) according to claim 11,
further comprising an input means (3) for receiving a selection of a data part and/or service within the combined data set.

13. Electronic device (1) according to claim 12,
wherein the input means (3) is a user interface (33) implemented in the electronic device (1) enabling the user to select a data part within the combined data set.

14. Electronic device (1) according to claim 12,
wherein the input means (3) is an interface for receiving the selection from one further electronic device (8, 8a, 8b, 8c, 8d).

15. Electronic device (1) according to any of claims 12 to 14,
wherein the central processing unit (4) is further adapted to determine depending on the information stored in the storage (6) the electronic device (1, 8, 8a, 8b, 8c, 8d) which has provided the selected data part and/or service.

16. Electronic device (1) according to claim 15,
wherein the central processing unit (4) is further adapted to send commands and/or messages to at least one further electronic device (8, 8a, 8b, 8c, 8d) in order to enable the processing of the selected data part and/or service.

17. Electronic device (1) according to any of the preceding claims,
wherein the central processing unit (4) is further adapted to regularly update the combined data set.

18. Method for providing a combined data set relating to program information, comprising the steps of
communicating with at least one further electronic device,
receiving (S2) from the at least one further electronic device a data set comprising information on broadcast programs,
combining (S5) the received data sets to a combined data set and
outputting (S6) the combined data set.

19. Method according to claim 18,
further comprising the step of requesting (S3) the data set from the at least one further electronic device (8, 8a, 8b, 8c, 8d)

20. Electronic device (1) according to claim 18 or 19,
further comprising the step of outputting the combined data set by a display (22) implemented in the electronic device (1).

21. Method according to claim 18 or 19,
further comprising the step of transmitting the combined data set to one further electronic device (8, 8a, 8b, 8c, 8d).

22. Method according to any of claims 18 to 21,
further comprising a reception unit (7) for receiving an own data set comprising information on broadcast programs from a remote station.

23. Method according to claim 22,
further comprising the step of combining (S5) the own data set and the received data sets to said combined data set.

24. Method according to any of the preceding claims,
further comprising the step of changing (S51) the format the data sets.

25. Method according to any of the preceding claims,
further comprising the step of eliminating (S52) redundant parts of data sets before combining the data sets.

26. Method according to any of the preceding claims,
further comprising the step of sorting (S54; S55) the data within the combined data set according to specific sorting parameters.

27. Method according to any of the preceding claims,
further comprising the step of receiving together with each data set an address identifying the further electronic device.

28. Method according to claim 27,
further comprising the step of storing (S4) the received data sets together with the received addresses.

29. Method according to claim 28,
further comprising the step of receiving a selection of a data part and/or service within the combined data set.

30. Method according to claim 29,
further comprising the step of enabling the user to select a data part within the combined data set via a user interface (23) implemented in the electronic device (1).

31. Method according to claim 29,
further comprising the step of receiving said selection from one further electronic device (8, 8a, 8b, 8c, 8d).

32. Method according to any of claims 29 to 31,
further comprising the step of determining (S 13) depending on the information stored in the storage (6) the electronic device (1, 8, 8a, 8b, 8c, 8d) which has provided the selected data part and/or service.

33. Method according to claim 32,
further comprising the step of sending (S 17) commands and/or messages to at least one further electronic device (8, 8a, 8b, 8c, 8d) in order to enable the processing of the selected data part and/or service.

34. Method according to any of the preceding claims,
further comprising the step of regularly updating the combined data set.
